# EUROPEAN PATENT APPLICATION

(11) **EP 4 443 769 A1**
(43) Date of publication of application: **09.10.2024**
(21) Application number: 21966403.4
(22) Date of filing: 02.12.2021
(51) Int. Cl.: H04B 10/291, H04J 14/02

(54) **OPTICAL NODE DEVICE, OPTICAL COMMUNICATION SYSTEM, AND TRANSFER METHOD**

(71) Applicant: Nippon Telegraph And Telephone Corporation, Chiyoda-ku Tokyo 100-8116 (JP)
(72) Inventor: KANAI Takuya, Musashino-shi, Tokyo 180-8585 (JP); KANEKO Shin, Musashino-shi, Tokyo 180-8585 (JP); SHIBATA Naotaka, Musashino-shi, Tokyo 180-8585 (JP); KANI Junichi, Musashino-shi, Tokyo 180-8585 (JP); YOSHIDA Tomoaki, Musashino-shi, Tokyo 180-8585 (JP)
(74) Representative: Brevalex
(86) International application number: PCT/JP2021/044276
(87) International publication number: WO 2023/100320

(57) **Abstract**

An optical node device to which a first subscriber device and a second subscriber device are connected in an optical communication system in which the first subscriber device and the second subscriber device are mixed, the first subscriber device being connected by one core using different wavelengths in transmission and reception, the second subscriber device being connected by two cores using the same wavelength in transmission and reception, the optical node device including: a transmission/reception separator that transfers an optical signal transmitted from the first subscriber device and an optical signal addressed to the first subscriber device without interference; and an optical switch that controls a connection relationship between ports such that an optical signal transmitted from the first subscriber device or an optical signal addressed to the first subscriber device passes through the transmission/reception separator and an optical signal transmitted from the second subscriber device or an optical signal addressed to the second subscriber device does not pass through the transmission/reception separator, and outputs an optical signal input from a certain optical transmission line from another optical transmission line.

## Description

### Technical Field

The present invention relates to an optical node device, an optical communication system, and a transfer method.

### Background Art

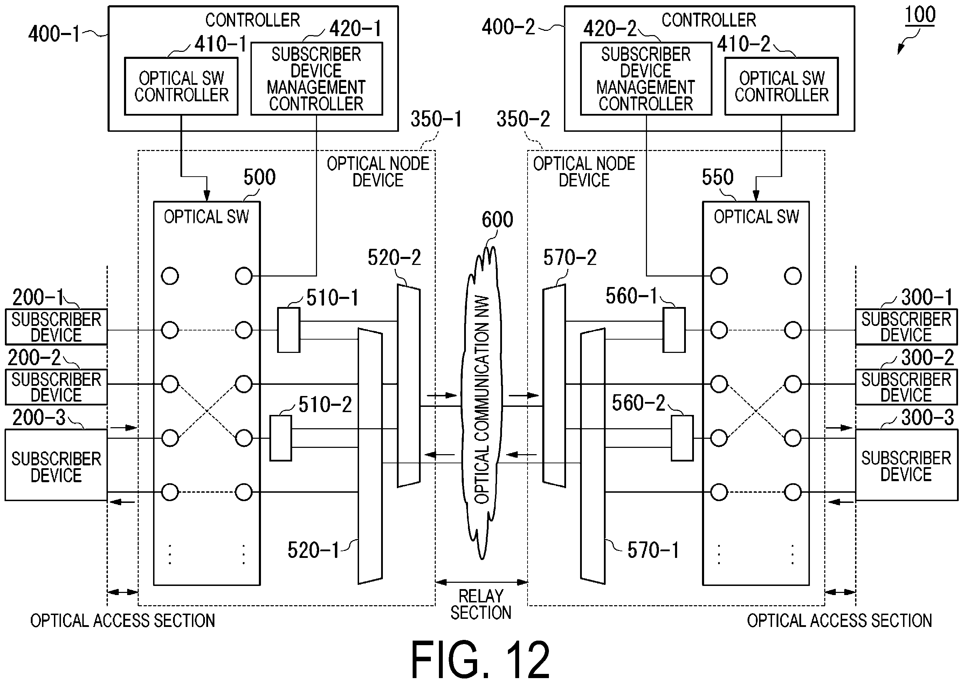

Conventionally, there has been proposed a system in which a subscriber device performs communication with an opposing subscriber device using an optical signal via an optical node device called a photonic gateway. Fig. 12 is a diagram for describing a configuration of a conventional optical communication system 100. As illustrated in Fig. 12, the conventional optical communication system 100 includes a plurality of subscriber devices 200-1 to 200-3, a plurality of subscriber devices 300-1 to 300-3, a plurality of optical node devices 350-1 to 350-2, and a plurality of controllers 400-1 to 400-2. The optical node device 350-1 and the optical node device 350-2 are connected via an optical communication NW 600 including an optical transmission line.

A section between the subscriber devices 200-1 to 200-3 and the optical node device 350-1 and a section between the subscriber devices 300-1 to 300-3 and the optical node device 350-2 are referred to as optical access sections. A section between the optical node device 350-1 and the optical node device 350-2 is referred to as a relay section. In the example illustrated in Fig. 12, each of the subscriber devices 200-1 and 200-2 and the optical node device 350-1 are connected through a one-core optical transmission line, and the subscriber device 200-3 and the optical node device 350-1 are connected through a two-core optical transmission line.

The optical node device 350-1 includes an optical SW 500, a plurality of transmission/reception separators 510-1 and 510-2, and a plurality of wavelength multiplexers/demultiplexers 520-1 and 520-2. The optical node device 350-2 includes an optical SW 550, a plurality of transmission/reception separators 560-1 and 560-2, and a plurality of wavelength multiplexers/demultiplexers 570-1 and 570-2. The controller 400-1 manages the subscriber device 200 and controls the operation of the optical node device 350-1. The controller 400-2 manages the subscriber devices 300 and controls the operation of the optical node device 350-2.

Here, a state in which the subscriber device 200-1 and the subscriber device 300-1 are communicating is conceived. Each of the subscriber devices 200 and 300 includes a wavelength-tunable transceiver. For example, the subscriber device 200-1 transmits an optical signal using a wavelength allocated in advance by a subscriber device management controller 420-1 of the controller 400-1. Similarly, the subscriber device 300-1 transmits an optical signal using a wavelength allocated in advance by a subscriber device management controller 420-2 of the controller 400-2. As described above, in the optical communication system 100, communication is performed between the subscriber device 200 and the subscriber device 300 using a wavelength allocated by each of the controllers 400-1 and 400-2.

For example, in the subscriber devices 200-1 and 200-2, one-core bidirectional communication is performed in the optical access section and the optical SWs 500 and 550 in the optical node devices 350-1 and 350-2. Therefore, the transmission/reception separators 510-1 and 510-2 are provided between the optical SW 500 and the wavelength multiplexers/demultiplexers 520-1 and 520-2, and the transmission/reception separators 510-1 and 510-2 separate or multiplex transmission and reception wavelengths. Then, the transmission/reception separators 510-1 and 510-2 and the wavelength multiplexers/demultiplexers 520-1 and 520-2 are connected through optical transmission lines.

Similarly, the transmission/reception separators 560-1 and 560-2 are provided between the optical SW 550 and the wavelength multiplexers/demultiplexers 570-1 and 570-2, and the transmission/reception separators 560-1 and 560-2 separate or multiplex transmission and reception wavelengths. Then, the transmission/reception separators 560-1 and 560-2 and the wavelength multiplexers/demultiplexers 570-1 and 570-2 are connected through optical transmission lines. Therefore, the relay section is connected by a two-core optical transmission line.

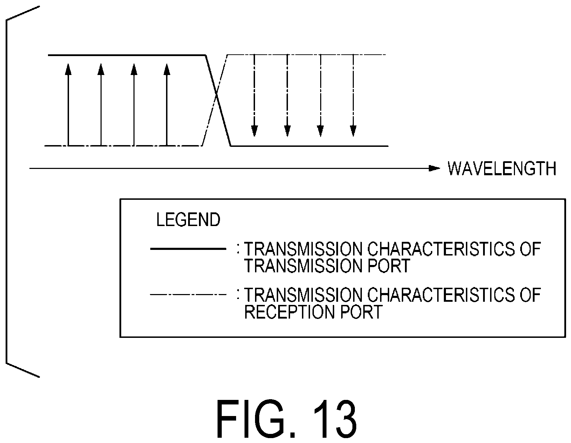

The transmission/reception separators have, for example, transmission characteristics as illustrated in Fig. 13, and have a function of multiplexing or demultiplexing optical signals of different wavelengths with a certain wavelength as a boundary. Fig. 13 illustrates an example in which a transmission wavelength of a transmission port is on a short wavelength side and a transmission wavelength of a reception port is on a long wavelength side. Note that the relationship between a wavelength and transmission/reception may be opposite to the characteristics illustrated in Fig. 13. Examples of means for realizing the transmission/reception separator include a transmission or reflection filter having wavelength dependency formed using a multilayer film filter or the like, a planar waveguide circuit (PLC), and the like.

In an optical communication system using a general wavelength division multiplexing (WDM) technology, a wavelength interval allocated to a subscriber device and a wavelength interval between channels of a wavelength multiplexer/demultiplexer are configured to be equal. For example, in a general WDM transmission system, wavelength channels are defined at intervals of 100 GHz or 50 GHz at a light frequency. A wavelength interval of a wavelength multiplexer/demultiplexer and a wavelength interval of a transceiver are designed in accordance with wavelength channels.

Fig. 12 illustrates a case in which one-core bidirectional communication is performed in the optical access section with respect to the subscriber devices 200-1 and 200-2 similarly to conventional optical access communication. However, in the optical communication system, as in the subscriber devices 200-3 and 300-3, it is also assumed that they are connected by individual optical transmission lines through transmission and reception in the optical access section. At this time, the optical SW and the wavelength multiplexer/demultiplexer are connected without a transmission/reception separator.

### Citation List

### Non Patent Literature

Non Patent Literature 1: Takuya Kanai, Kazuaki Honda, Yasunari Tanaka, Shin Kaneko, Kazuki Hara, Junichi Kani, Tomoaki Yoshida, "Photonic Gateway for All-Photonics Network," IEICE general conference, B-8-20, March 2021.
Non Patent Literature 2: Kazuaki Honda, "Photonic Gateway for Direct and Protocol-Independent End-to-End User Connections", OFC2021.

### Summary of Invention

### Technical Problem

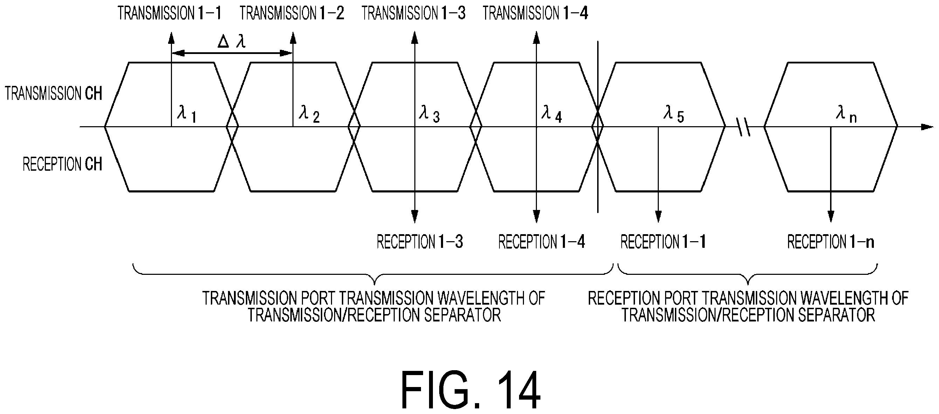

In a case in which one-core bidirectional communication is performed in the optical access section and a transmission/reception separator is used, transmission and reception wavelengths need to be sufficiently separated in order to sufficiently secure isolation between transmission and reception optical signals. As illustrated in Fig. 14, wavelengths are roughly divided into two groups of a short wavelength side and a long wavelength side and are disposed to be allocated to transmission and reception. Examples of transmission and reception in Fig. 14 illustrate a state viewed from the subscriber device 200 accommodated in the optical node device 350-1. As a result, the number of available wavelengths channels is halved with respect to an effective wavelength range. "Effective wavelength tunable width" is the wavelength tunable width of the wavelength tunable transceiver mounted in the subscriber device or the operating wavelength range of the wavelength multiplexer/demultiplexer mounted in the optical node device. From the viewpoint of cost, the wavelength tunable transceiver desirably uses the same optical device and configuration in all subscriber devices, and the wavelength tunable range is also desirably the same. In this case, in a case in which different wavelengths are used in transmission and reception, the number of available channels is half or less with respect to the wavelength tunable range of the wavelength tunable transceiver.

In wavelength allocation by the controller 400, a problem in wavelength allocation occurs in a case in which a configuration in which the same wavelength is used in transmission and reception and a configuration in which different wavelengths are used in transmission and reception by the subscriber devices 200 and 300 are mixed. For example, as illustrated in Fig. 12, it is necessary to use different wavelengths in transmission and reception in a case in which one-core bidirectional communication is performed in the optical access section such as the subscriber devices 200-1, 200-2, 300-1, and 300-2, whereas it is possible to use the same wavelength in transmission and reception in a case in which two-core bidirectional communication is performed in the optical access section such as the subscriber devices 200-3 and 300-3. As described above, since it is necessary to change the policy of wavelength management for transmission and reception depending on the connection form of the optical access section, there is a problem that wavelength management becomes complicated.

In view of the above circumstances, an object of the present invention is to provide a technology capable of easily performing wavelength management in an optical communication system in which a configuration in which a subscriber device uses the same wavelength in transmission and reception and a configuration in which a subscriber device uses different wavelengths in transmission and reception are mixed.

### Solution to Problem

An aspect of the present invention is an optical node device to which a first subscriber device and a second subscriber device are connected in an optical communication system in which the first subscriber device and the second subscriber device are mixed, the first subscriber device being connected by one core using different wavelengths in transmission and reception, the second subscriber device being connected by two cores using the same wavelength in transmission and reception, the optical node device including: a transmission/reception separator that transfers an optical signal transmitted from the first subscriber device and an optical signal addressed to the first subscriber device without interference; and an optical switch that controls a connection relationship between ports such that an optical signal transmitted from the first subscriber device or an optical signal addressed to the first subscriber device passes through the transmission/reception separator and an optical signal transmitted from the second subscriber device or an optical signal addressed to the second subscriber device does not pass through the transmission/reception separator, and outputs an optical signal input from a certain optical transmission line from another optical transmission line.

An aspect of the present invention is an optical communication system including a plurality of subscriber devices, and an optical node device to which the plurality of subscriber devices is connected, wherein each of the subscriber devices includes a transmitter that transmits an optical signal, and a transmission/reception separator that transfers the optical signal transmitted by the transmitter and a received optical signal without interference, and the optical node device includes an optical switch that controls a connection relationship between ports such that optical signals transmitted from the subscriber devices are output to destination optical transmission lines, and optical signals addressed to the subscriber devices are output to the subscriber devices.

An aspect of the present invention is a transfer method performed by an optical node device to which a first subscriber device and a second subscriber device are connected in an optical communication system in which the first subscriber device and the second subscriber device are mixed, the first subscriber device being connected by one core using different wavelengths in transmission and reception, the second subscriber device being connected by two cores using the same wavelength in transmission and reception, the transfer method including: transferring, by a transmission/reception separator, an optical signal transmitted from the first subscriber device and an optical signal addressed to the first subscriber device without interference; and controlling a connection relationship between ports such that an optical signal transmitted from the first subscriber device or an optical signal addressed to the first subscriber device passes through the transmission/reception separator and an optical signal transmitted from the second subscriber device or an optical signal addressed to the second subscriber device does not pass through the transmission/reception separator, and outputting an optical signal input from a certain optical transmission line from another optical transmission line.

### Advantageous Effects of Invention

According to the present invention, it is possible to easily perform wavelength management in an optical communication system in which a configuration in which a subscriber device uses the same wavelength in transmission and reception and a configuration in which a subscriber device uses different wavelengths in transmission and reception are mixed.

### Brief Description of Drawings

Fig. 1 is a diagram illustrating a configuration of an optical communication system in a first embodiment.
Fig. 2 is a diagram illustrating an example of wavelength arrangement in the first embodiment.
Fig. 3 is a diagram illustrating another example of wavelength arrangement in the first embodiment.
Fig. 4 is a sequence diagram for describing a flow of processing of the optical communication system in the first embodiment.
Fig. 5 is a diagram illustrating an example of wavelength arrangement in a second embodiment.
Fig. 6 is a diagram illustrating a configuration of an optical communication system in a third embodiment.
Fig. 7 is a diagram illustrating a configuration of a transmission/reception separator in the third embodiment.
Fig. 8 is a diagram illustrating an example of transmission characteristics of a first optical filter and a second optical filter.
Fig. 9 is a diagram illustrating a configuration of an optical communication system in a fourth embodiment.
Fig. 10 is a diagram illustrating a configuration of an optical communication system in a fifth embodiment.
Fig. 11 is a diagram illustrating an example of a configuration of a subscriber device in the fifth embodiment.
Fig. 12 is a diagram for describing a configuration of a conventional optical communication system.
Fig. 13 is a diagram for describing transmission characteristics of a transmission/reception separator.
Fig. 14 is a diagram illustrating an example of wavelength arrangement of a conventional technology.

### Description of Embodiments

Hereinafter, an embodiment of the present invention will be described with reference to the drawings.

### (First Embodiment)

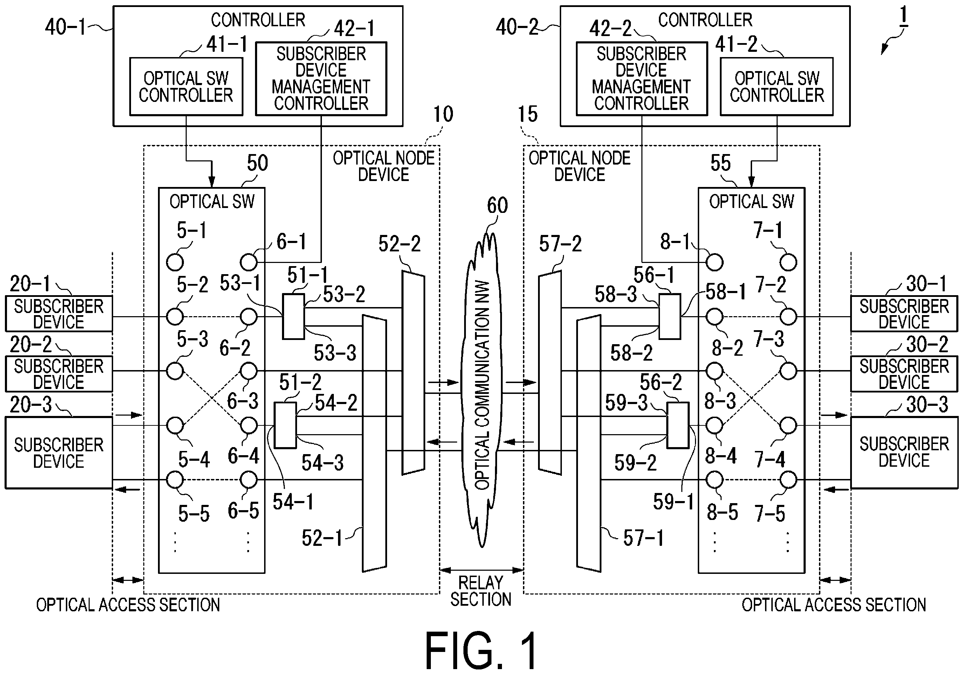

Fig. 1 is a diagram illustrating a configuration of an optical communication system 1 in a first embodiment. The optical communication system 1 includes a plurality of optical node devices 10 and 15, a plurality of subscriber devices 20-1 to 20-3, a plurality of subscriber devices 30-1 to 30-3, and a plurality of controllers 40-1 and 40-2. Note that the number of the subscriber devices 20 and 30 may be two or more. The configuration of the optical communication system 1 is basically similar to the configuration illustrated in Fig. 12 except for the configuration of the optical node devices 10 and 15.

The optical node device 10 and each subscriber device 20 are connected by an optical transmission line, and the optical node device 15 and each subscriber device 30 are connected by an optical transmission line. An optical transmission line is, for example, an optical fiber. The optical node device 10 and the optical node device 15 are connected via an optical communication NW 60 including an optical transmission line.

In the following description, a section between the subscriber devices 20-1 to 20-3 and the optical node device 10 and a section between the subscriber devices 30-1 to 30-3 and the optical node device 15 will be referred to as an optical access section, and a section between the optical node device 10 and the optical node device 15 will be referred to as a relay section. In the example illustrated in Fig. 1, each of the subscriber devices 20-1 and 20-2 and the optical node device 10 are connected through a one-core optical transmission line, and the subscriber device 20-3 and the optical node device 10 are connected through a two-core optical transmission line. Similarly, each of the subscriber devices 30-1 and 30-2 and the optical node device 15 are connected through a one-core optical transmission line, and the subscriber device 30-3 and the optical node device 15 are connected through a two-core optical transmission line.

The optical node device 10 includes an optical SW 50, a plurality of transmission/reception separators 51-1 and 51-2, and a plurality of wavelength multiplexers/demultiplexers 52-1 and 52-2. The first embodiment is different from the conventional configuration in that the optical node device 10 uses a transmission/reception separator having no wavelength dependency instead of a transmission/reception separator that separates an optical signal with a wavelength used in the conventional technology. Examples of the transmission/reception separator having no wavelength dependency include a circulator. Having no wavelength dependency means that the function is not affected by the wavelength. The transmission/reception separator having no wavelength dependency can transfer an optical signal regardless of the wavelength.

The optical SW 50 is an optical switch having M (M is an integer of 2 or more) ports 5 and O (O is an integer of 2 or more) ports 6. In the present embodiment, the numbers of M and O will be described as five. An optical signal input to a certain port of the optical SW 50 is output from another port. For example, the optical signal input to the port 5 of the optical SW 50 is output from the port 6. In the optical SW 50, a connection relationship between the port 5 and the port 6 is set under the control of the controller 40-1.

The subscriber device 20-1 is connected to a port 5-2 of the optical SW 50 via an optical transmission line, the subscriber device 20-2 is connected to a port 5-3 of the optical SW 50 via an optical transmission line, and the subscriber device 20-3 is connected to ports 5-4 and 5-5 of the optical SW 50 via an optical transmission line.

The controller 40-1 is connected to a port 6-1 of the optical SW 50 via an optical transmission line, the transmission/reception separator 51-1 is connected to a port 6-2 of the optical SW 50 via an optical transmission line, the wavelength multiplexer/demultiplexer 52-2 is connected to a port 6-3 of the optical SW 50 via an optical transmission line, the transmission/reception separator 51-2 is connected to a port 6-4 of the optical SW 50 via an optical transmission line, and the wavelength multiplexer/demultiplexer 52-1 is connected to a port 6-5 of the optical SW 50 via an optical transmission line.

The transmission/reception separators 51-1 and 51-2 are circulators, for example. The transmission/reception separators 51-1 and 51-2 have at least three ports. In the following description, it is assumed that the transmission/reception separators 51-1 and 51-2 have three ports. A first port 53-1 included in the transmission/reception separator 51-1 is connected to the port 6 (port 6-2 in Fig. 1) of the optical SW 50. A second port 53-2 included in the transmission/reception separator 51-1 is connected to the wavelength multiplexer/demultiplexer 52-2. A third port 53-3 included in the transmission/reception separator 51-1 is connected to the wavelength multiplexer/demultiplexer 52-1. An optical signal input to the first port 53-1 is output from the second port 53-2. An optical signal input to the second port 53-2 is output from the third port 53-3. An optical signal input to the third port 53-3 is output from the first port 53-1.

Similarly, a first port 54-1 included in the transmission/reception separator 51-2 is connected to the port 6 (port 6-4 in Fig. 1) of the optical SW 50. A second port 54-2 included in the transmission/reception separator 51-2 is connected to the wavelength multiplexer/demultiplexer 52-2. A third port 54-3 included in the transmission/reception separator 51-2 is connected to the wavelength multiplexer/demultiplexer 52-1. An optical signal input to the first port 54-1 is output from the second port 54-2. An optical signal input to the second port 54-2 is output from the third port 54-3. An optical signal input to the third port 54-3 is output from the first port 54-1.

As described above, the transmission/reception separators 51-1 and 51-2 have directivity and port selectivity, but have no wavelength dependency. Therefore, an optical signal output from the subscriber device 20 can be output to the optical SW 50 regardless of the wavelength of the optical signal. Further, the transmission/reception separators 51-1 and 51-2 can transfer the optical signal transferred from the optical SW 50 to the wavelength multiplexer/demultiplexer 52-2 regardless of the wavelength of the optical signal.

The wavelength multiplexers/demultiplexers 52-1 and 52-2 multiplex or demultiplex input optical signals. The wavelength multiplexers/demultiplexers 52-1 and 52-2 are, for example, arrayed waveguide gratings (AWG).

The optical node device 15 includes an optical SW 55, a plurality of transmission/reception separators 56-1 and 56-2, and a plurality of wavelength multiplexers/demultiplexers 57-1 and 57-2. The first embodiment is different from the conventional configuration in that the optical node device 15 uses a transmission/reception separator having no wavelength dependency instead of a transmission/reception separator that separates an optical signal with a wavelength used in the conventional technology. Examples of the transmission/reception separator having no wavelength dependency include a circulator.

The optical SW 55 is an optical switch having P (P is an integer of 2 or more) ports 7 and Q (Q is an integer of 2 or more) ports 8. In the present embodiment, the numbers of P and Q will be described as five. An optical signal input to a certain port of the optical SW 55 is output from another port. For example, an optical signal input to the port 7 of the optical SW 55 is output from the port 8. In the optical SW 55, a connection relationship between the port 7 and the port 8 is set under the control of the controller 40-2.

The subscriber device 30-1 is connected to a port 7-2 of the optical SW 55 via an optical transmission line, the subscriber device 30-2 is connected to a port 7-3 of the optical SW 55 via an optical transmission line, and the subscriber device 30-3 is connected to ports 7-4 and 7-5 of the optical SW 55 via an optical transmission line.

The controller 40-2 is connected to a port 8-1 of the optical SW 55 via an optical transmission line, the transmission/reception separator 56-1 is connected to a port 8-2 of the optical SW 55 via an optical transmission line, the wavelength multiplexer/demultiplexer 57-2 is connected to a port 8-3 of the optical SW 55 via an optical transmission line, the transmission/reception separator 56-2 is connected to a port 8-4 of the optical SW 55 via an optical transmission line, and the wavelength multiplexer/demultiplexer 57-1 is connected to a port 8-5 of the optical SW 55 via an optical transmission line.

The transmission/reception separators 56-1 and 56-2 are circulators, for example. The transmission/reception separators 56-1 and 56-2 have at least three ports. In the following description, it is assumed that the transmission/reception separators 56-1 and 56-2 have three ports. A first port 58-1 included in the transmission/reception separator 56-1 is connected to the port 8 (port 8-2 in Fig. 1) of the optical SW 55. A second port 58-2 included in the transmission/reception separator 56-1 is connected to the wavelength multiplexer/demultiplexer 57-1. A third port 58-3 included in the transmission/reception separator 56-1 is connected to the wavelength multiplexer/demultiplexer 57-2. An optical signal input to the first port 58-1 is output from the second port 58-2. An optical signal input to the second port 58-2 is output from the third port 58-3. An optical signal input to the third port 58-3 is output from the first port 58-1.

Similarly, a first port 59-1 included in the transmission/reception separator 56-2 is connected to the port 8 (port 8-4 in Fig. 1) of the optical SW 55. A second port 59-2 included in the transmission/reception separator 56-2 is connected to the wavelength multiplexer/demultiplexer 57-1. A third port 59-3 included in the transmission/reception separator 56-2 is connected to the wavelength multiplexer/demultiplexer 57-2. An optical signal input to the first port 59-1 is output from the second port 59-2. An optical signal input to the second port 59-2 is output from the third port 59-3. An optical signal input to the third port 59-3 is output from the first port 59-1.

As described above, the transmission/reception separators 56-1 and 56-2 have directivity and port selectivity, but have no wavelength dependency. Therefore, an optical signal output from the subscriber device 30 can be output to the optical SW 55 regardless of the wavelength of the optical signal. Further, the transmission/reception separators 56-1 and 56-2 can transfer the optical signal transferred from the optical SW 55 to the wavelength multiplexer/demultiplexer 57-2 regardless of the wavelength of the optical signal.

The subscriber devices 20 and 30 include a wavelength tunable optical transceiver as an optical transceiver. Therefore, the subscriber devices 20 and 30 can communicate with an arbitrary wavelength. Wavelengths used by the subscriber devices 20 and 30 for communication are allocated by the controller 40. For example, the wavelength used by the subscriber device 20 for communication is allocated by the controller 40-1, and the wavelength used by the subscriber device 30 for communication is allocated by the controller 40-2. The optical transceiver may be an optical transceiver having an auxiliary management and control channel (AMCC) function. In this case, the wavelengths used in the subscriber devices 20 and 30 are controlled via a control signal superimposed by the AMCC. The subscriber devices 20 and 30 are, for example, optical network units (ONUs) installed in a subscriber's home.

The controllers 40-1 and 40-2 perform at least control of the subscriber devices 20 and 30 and control of the optical SWs 50 and 55. Here, control of the subscriber devices 20 and 30 is, for example, allocation of light emission wavelengths to the subscriber devices 20 and 30, a light stop instruction, a wavelength change instruction, and the like. Control of the optical SWs 50 and 55 is, for example, connection setting between ports of the optical SWs 50 and 55, setting of an optical path, and the like. Since the controller 40-1 and the controller 40-2 perform similar processing except that control targets are different, the controller 40-1 will be described as an example.

The controller 40-1 includes an optical SW controller 41-1 and a subscriber device management controller 42-1. The optical SW controller 41-1 controls connection between ports of the optical SW 50. Specifically, the optical SW controller 41-1 controls connection between ports of the optical SW 50 such that an optical signal transmitted from the subscriber device 20 is transferred to a subscriber device (for example, the subscriber device 30-1) that is a transmission destination. Controlling connection between ports means setting a path such that a certain port and another port are connected. Further, the optical SW controller 41-1 controls connection between ports of the optical SW 50 such that an optical signal addressed to the subscriber device 20 is transferred to the subscriber device 20.

The subscriber device management controller 42-1 allocates a wavelength to each subscriber device 20. In a case in which the subscriber device management controller 42-1 allocates a wavelength to each of the subscriber devices 20, the optical SW controller 41-1 sets a path between ports of the optical SW 50 such that the subscriber device 20 to which the wavelength is to be allocated and the subscriber device management controller 42-1 are connected.

The subscriber device management controller 42-1 stores a management table. The management table includes information for identifying the subscriber device 20, information on a wavelength allocated to the subscriber device 20, and information on the optical SW 50 to which the subscriber device 20 is connected (for example, information on a port to which the subscriber device 20 is connected, and the like.). Each controller 40 includes one or more processors. Note that each functional unit included in each controller 40 is realized by each controller 40 being mounted on one server.

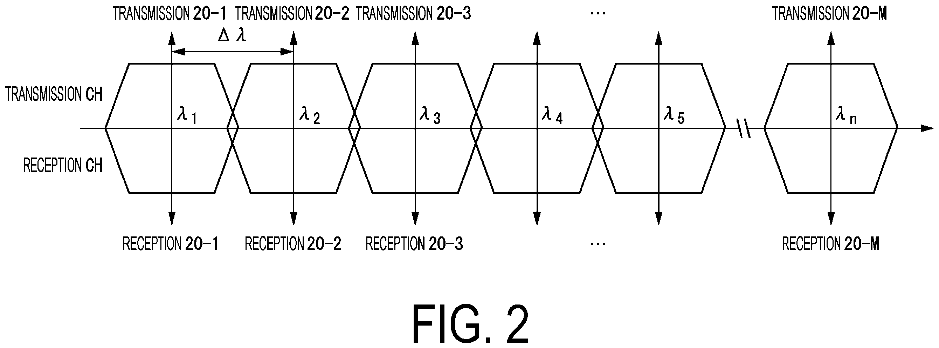

With the configuration illustrated in Fig. 1, the same transmission wavelength and reception wavelength can be allocated to the subscriber devices 20 and 30 connected to the optical node devices 10 and 15 as illustrated in Fig. 2. Fig. 2 is a diagram illustrating an example of wavelength arrangement in the first embodiment. A trapezoid illustrated in Fig. 2 represents an image of a transmission band of each wavelength channel of the wavelength multiplexers/demultiplexers 52 and 57. The same wavelength channel transmits the same trapezoid. The same applies to Fig. 2 and the subsequent drawings. The example of transmission and reception in Fig. 2 illustrates a state viewed from the subscriber device 20 accommodated in the optical node device 10. As illustrated in Fig. 2, for example, the subscriber device management controller 42-1 can allocate a wavelength λ₁ to the subscriber device 20-1 as a wavelength to be used for a transmission wavelength and a reception wavelength, and allocate a wavelength λ₂ to the subscriber device 20-2 as a wavelength to be used for a transmission wavelength and a reception wavelength.

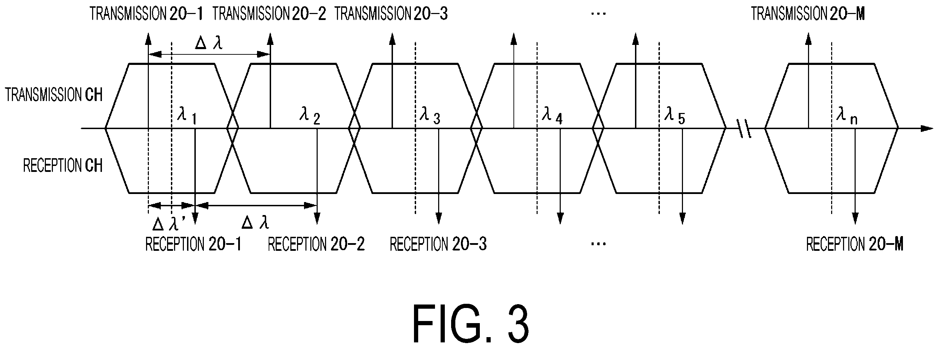

Alternatively, the subscriber device management controller 42 may allocate a wavelength that allows transmission of the same wavelength channel in the wavelength multiplexers/demultiplexers 52 and 57. For example, as illustrated in Fig. 3, transmission and reception wavelengths may be arranged to be shifted by Δλ' in accordance with transmission characteristics of the wavelength multiplexers/demultiplexers 52 and 57. Fig. 3 is a diagram illustrating another example of wavelength arrangement in the first embodiment; The example of transmission and reception in Fig. 3 illustrates a state viewed from the subscriber device 20 accommodated in the optical node device 10.

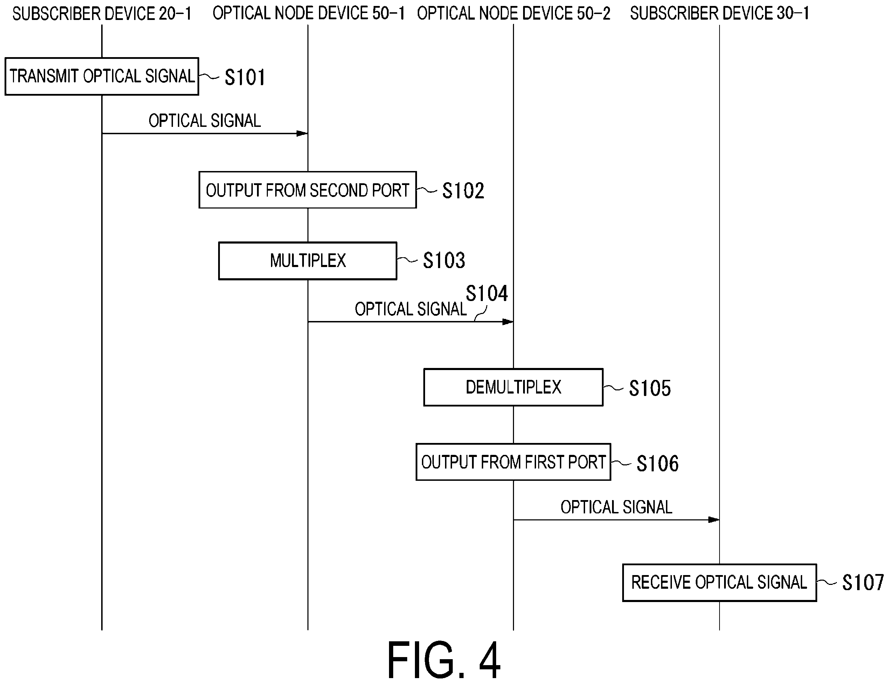

Fig. 4 is a sequence diagram for describing a flow of processing of the optical communication system 1 in the first embodiment. It is assumed that the connection relationship between the ports of the optical SW 30 is set as illustrated in Fig. 1 at the start of processing of Fig. 4. Although Fig. 4 illustrates processing of the subscriber device 20-1 as the subscriber device 20 and processing of the subscriber device 30-1 as the subscriber device 30, processing of the subscriber devices 20-2 and 20-3 and the subscriber devices 30-2 and 30-3 will also be described.

The subscriber device 20-1 transmits an optical signal having a wavelength allocated by the controller 40-1 (step S101). For example, the subscriber device management controller 42-1 of the controller 40-1 allocates the same wavelength (for example, wavelength λ₁) to the subscriber device 20-1 for transmission and reception. Similarly, the subscriber device management controller 42-1 of the controller 40-1 allocates the same wavelength (for example, wavelength λ₂) to the subscriber device 20-2 for transmission and reception, and allocates the same wavelength (for example, wavelength λ₃) to the subscriber device 20-3 for transmission and reception.

For example, the subscriber device management controller 42-2 of the controller 40-2 allocates the same wavelength (for example, wavelength λ₁) to the subscriber device 30-1 for transmission and reception. Similarly, the subscriber device management controller 42-2 of the controller 40-2 allocates the same wavelength (for example, wavelength λ₂) to the subscriber device 30-2 for transmission and reception, and allocates the same wavelength (for example, wavelength λ₃) to the subscriber device 30-3 for transmission and reception.

The subscriber device 20-1 is connected to the port 5-2 of the optical SW 50 via an optical transmission line. An optical signal transmitted from the subscriber device 20-1 is input to the port 5-2 of the optical SW 50 via an optical transmission line. The port 5-2 of the optical SW 50 is connected to the port 6-2. Therefore, an optical signal input to the port 5-2 of the optical SW 50 is output from the port 6-2.

The first port 53-1 of the transmission/reception separator 51-1 is connected to the port 6-2 of the optical SW 50. Therefore, the optical signal output from the port 6-2 of the optical SW 50 is input to the first port 53-1 of the transmission/reception separator 51-1. The optical signal input to the first port 53-1 of the transmission/reception separator 51-1 is output from the second port 53-2 (step S102). The optical signal output from the second port 53-2 of the transmission/reception separator 51-1 is input to the wavelength multiplexer/demultiplexer 52-2.

The subscriber devices 20-2 and 20-3 also transmit optical signals having wavelengths allocated by the controller 40-1, similarly to the subscriber device 20-1. The subscriber device 20-2 is connected to the port 5-3 of the optical SW 50 via an optical transmission line. An optical signal transmitted from the subscriber device 20-2 is input to the port 5-3 of the optical SW 50 via an optical transmission line. the port 5-3 of optical SW 50 is connected to the port 6-4. Therefore, the optical signal input to the port 5-3 of the optical SW 50 is output from the port 6-4.

The first port 54-1 of the transmission/reception separator 51-2 is connected to the port 6-4 of the optical SW 50. Therefore, the optical signal output from the port 6-4 of the optical SW 50 is input to the first port 54-1 of the transmission/reception separator 51-2. The optical signal input to the first port 54-1 of the transmission/reception separator 51-2 is output from the second port 54-2. The optical signal output from the second port 54-2 of the transmission/reception separator 51-2 is input to the wavelength multiplexer/demultiplexer 52-2.

The subscriber device 20-3 is connected to the ports 5-4 and 5-5 of the optical SW 50 via optical transmission lines. The subscriber device 20-3 is connected to the optical SW 50 through a two-core optical transmission line. Therefore, it is assumed that a transmission port of the subscriber device 20-3 is connected to the port 5-4 of the optical SW 50 and a reception port of the subscriber device 20-3 is connected to the port 5-5 of the optical SW 50. An optical signal transmitted from the subscriber device 20-3 is input to the port 5-4 of the optical SW 50 via an optical transmission line. The port 5-4 of optical SW 50 is connected to the port 6-3. Therefore, the optical signal input to the port 5-4 of the optical SW 50 is output from the port 6-3.

The wavelength multiplexer/demultiplexer 52-2 is connected to the port 6-3 of the optical SW 50. Therefore, the optical signal output from the port 6-3 of the optical SW 50 is input to the wavelength multiplexer/demultiplexer 52-2. As described above, optical signals having different wavelengths transmitted from the respective subscriber devices 20 are input to the wavelength multiplexer/demultiplexer 52-2. The wavelength multiplexer/demultiplexer 52-2 multiplexes the input optical signals having different wavelengths (step S103).

The optical signal multiplexed by the wavelength multiplexer/demultiplexer 52-2 is transmitted to the optical node device 15 via an optical transmission line (step S104). The wavelength multiplexer/demultiplexer 52-2 is connected to the wavelength multiplexer/demultiplexer 57-2 of the optical node device 15 via an optical transmission line. Therefore, the optical signal multiplexed by the wavelength multiplexer/demultiplexer 52-2 is input to the wavelength multiplexer/demultiplexer 57-2. The wavelength multiplexer/demultiplexer 57-2 demultiplexes the input optical signal (step S105). The optical signals demultiplexed by the wavelength multiplexer/demultiplexer 57-2 are output from ports corresponding to the wavelengths thereof. Here, it is assumed that the optical signals demultiplexed by the wavelength multiplexer/demultiplexer 57-2 are input to the third port 58-3 of the transmission/reception separator 56-1, the port 8-3 of the optical SW 55, and the third port 59-3 of the transmission/reception separator 56-2.

The optical signal input to the third port 58-3 of the transmission/reception separator 56-1 is output from the first port 58-1 of the transmission/reception separator 56-1 (step S106). The first port 58-1 of the transmission/reception separator 56-1 is connected to the port 8-2 of the optical SW 55. Therefore, the optical signal output from the first port 58-1 of the transmission/reception separator 56-1 is input to the port 8-2 of the optical SW 55. The port 8-2 of the optical SW 55 is connected to the port 7-2. Therefore, the optical signal input to the port 8-2 of the optical SW 55 is output from the port 7-2 of the optical SW 55. The subscriber device 30-1 is connected to the port 7-2 of the optical SW 55. Therefore, the optical signal output from the port 7-2 of the optical SW 55 is input to the subscriber device 30-1 via an optical transmission line. As a result, the subscriber device 30-1 receives the optical signal having the wavelength λ₁ (step S107).

The port 8-3 of the optical SW 55 is connected to the port 7-4. Therefore, the optical signal input to the port 8-3 of the optical SW 55 is output from the port 7-4. The subscriber device 30-3 is connected to the port 7-4 of the optical SW 55. Therefore, the optical signal output from the port 7-4 of the optical SW 55 is input to the subscriber device 30-3 via an optical transmission line. As a result, the subscriber device 30-3 receives the optical signal having the wavelength λ₃.

The optical signal input to the third port 59-3 of the transmission/reception separator 56-2 is output from the first port 59-1 of the transmission/reception separator 56-2. The first port 59-1 of the transmission/reception separator 56-2 is connected to the port 8-4 of the optical SW 55. Therefore, the optical signal output from the first port 59-1 of the transmission/reception separator 56-2 is input to the port 8-4 of the optical SW 55. The port 8-4 of the optical SW 55 is connected to the port 7-3. Therefore, the optical signal input to the port 8-4 of the optical SW 55 is output from the port 7-3 of the optical SW 55. The port 7-3 of the optical SW 55 is connected to the subscriber device 30-2. Therefore, the optical signal output from the port 7-3 of the optical SW 55 is input to the subscriber device 30-2 via an optical transmission line. As a result, the subscriber device 30-2 receives the optical signal having the wavelength λ₂.

According to the optical communication system 1 configured as described above, wavelength management can be easily performed in an optical communication system in which a configuration in which a subscriber device uses the same wavelength in transmission and reception and a configuration in which a subscriber device uses different wavelengths in transmission and reception are mixed. Specifically, in the optical communication system 1, by using the transmission/reception separators having no wavelength dependency, wavelength management in transmission and reception can be managed through the same method without depending on the connection form (one core or two cores) of the optical access section, and complication of wavelength management can be curbed. As a result, wavelength management can be easily performed in an optical communication system in which a configuration in which a subscriber device uses the same wavelength in transmission and reception and a configuration in which a subscriber device uses different wavelengths in transmission and reception are mixed.

Furthermore, in the optical communication system 1, it is possible to perform communication using all wavelength channels in the wavelength tunable range of the wavelength tunable transceivers mounted in the subscriber devices 20 and 30. As a result, the number of users that can be accommodated in the optical node devices 10 and 15 can be increased.

### (Second Embodiment)

In a second embodiment, a configuration in which a relationship between transmission and reception wavelengths in a subscriber device is arranged to be Δλ/2 will be described. A system configuration of the second embodiment is similar to that of the first embodiment.

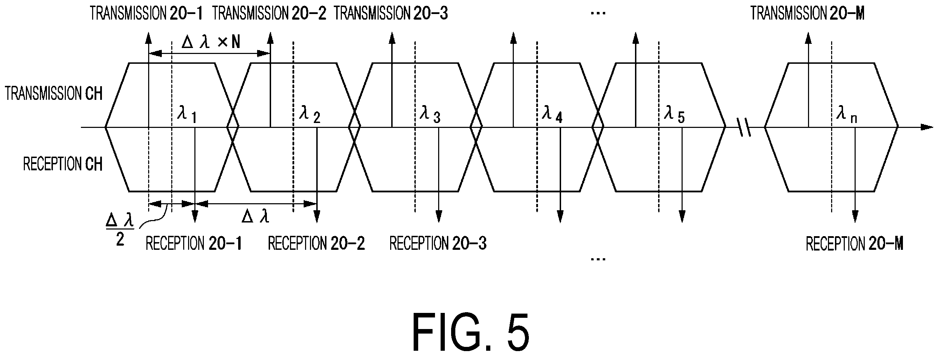

Fig. 5 is a diagram illustrating an example of wavelength arrangement in the second embodiment. The example of transmission and reception in Fig. 5 illustrates a state viewed from the subscriber device 20 accommodated in the optical node device 10. As illustrated in Fig. 5, for example, the subscriber device management controller 42-1 arranges transmission and reception wavelengths in the subscriber device 20-1 such that the relationship therebetween becomes Δλ/2, and further, sets a transmission wavelength band of the wavelength multiplexer/demultiplexer 52 to Δλ×N (N = 2, 3, 4, ... n), and allocates a wavelength matched with the transmission wavelength of the wavelength multiplexer/demultiplexer 52 to the subscriber device 20.

Similarly, the subscriber device management controller 42-2, for example, arranges transmission and reception wavelengths in the subscriber device 30-1 such that the relationship therebetween becomes Δλ/2, and further, sets a transmission wavelength band of the wavelength multiplexer/demultiplexer 57 to Δλ×N (N = 2, 3, 4, ... n), and allocates a wavelength matched with the transmission wavelength of the wavelength multiplexer/demultiplexer 57 to the subscriber device 20.

According to the optical communication system 1 of the second embodiment configured as described above, effects similar to those of the first embodiment can be obtained.

### (Third Embodiment)

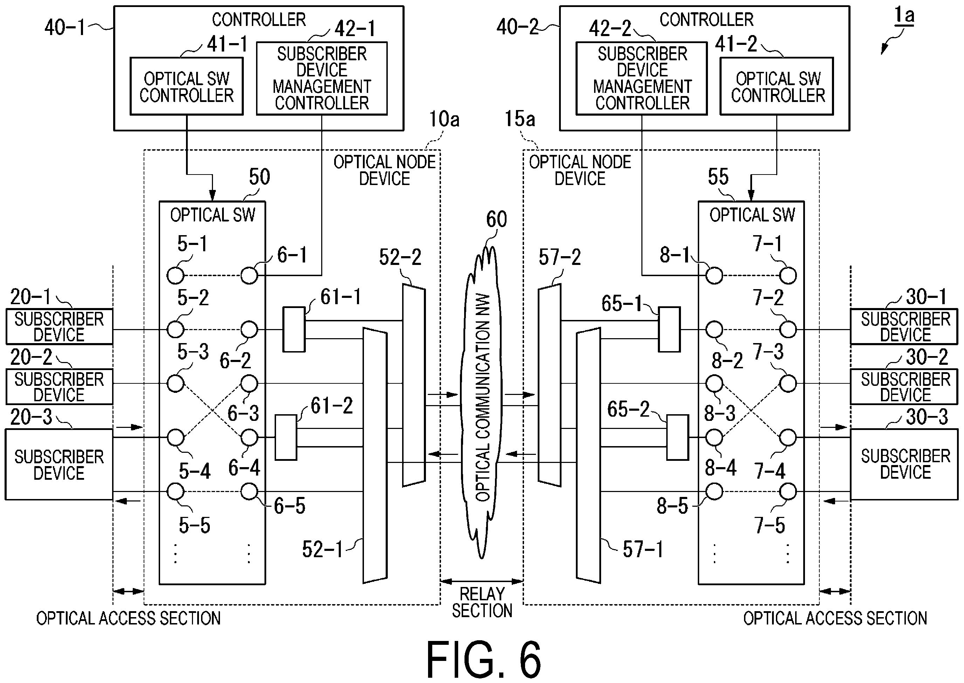

In a third embodiment, a configuration in a case in which the transmission/reception separator has a different configuration will be described. Fig. 6 is a diagram illustrating a configuration of an optical communication system 1a in the third embodiment. The optical communication system 1a includes a plurality of optical node devices 10a and 15a, a plurality of subscriber devices 20-1 to 20-3, a plurality of subscriber devices 30-1 to 30-3, and a plurality of controllers 40-1 and 40-2. The optical communication system 1a is different from the optical communication system 1 in that optical node devices 10a and 15a are provided instead of the optical node devices 10 and 15.

The controller 40 allocates a wavelength shifted by Δλ' between transmission and reception to the subscriber devices 20 and 30 as in the first embodiment (for example, the wavelength arrangement illustrated in Fig. 3).

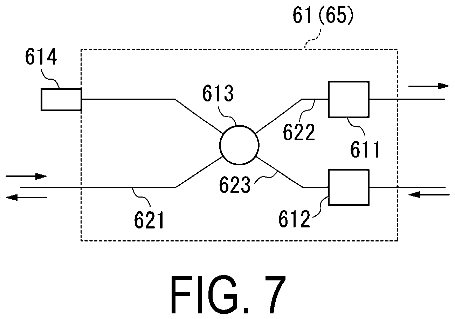

The optical node device 10a includes an optical SW 50, a plurality of transmission/reception separators 61-1 and 61-2, and a plurality of wavelength multiplexers/demultiplexers 52-1 and 52-2. The optical node device 15a includes the optical SW 50, a plurality of transmission/reception separators 65-1 and 65-2, and a plurality of wavelength multiplexers/demultiplexers 57-1 and 57-2. The optical node devices 10a and 15a have a configuration illustrated in Fig. 7 as the transmission/reception separators 61-1 and 61-2 or the transmission/reception separators 65-1 and 65-2 which are not circulators. Fig. 7 is a diagram illustrating a configuration of the transmission/reception separators 61 and 65 in the third embodiment.

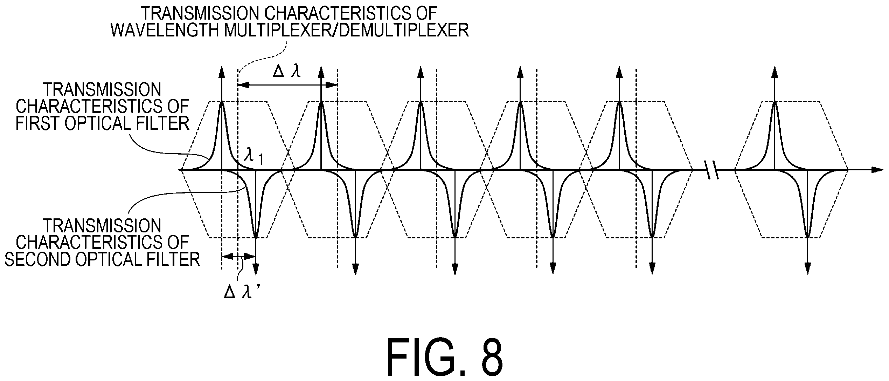

The transmission/reception separators 61 and 65 include a first optical filter 611, a second optical filter 612, an optical coupler 613, and an optical nonreflective terminator 614. The first optical filter 611 and the second optical filter 612 have transmission characteristics as illustrated in Fig. 8, and are configured to transmit wavelengths of transmission and reception signals, respectively. Here, the transmission characteristics are different between the optical filters in accordance with the shift width Δλ' between the transmission and reception wavelengths. Examples of means for realizing the optical filter having such transmission characteristics include an etalon filter, a Mach-Zehnder interferometer, and the like. Fig. 8 is a diagram illustrating an example of the transmission characteristics of the first optical filter 611 and the second optical filter 612.

The optical coupler 613 has a configuration in which one port of a 2×2 coupler is terminated by the optical nonreflective terminator 614 to seal input and output of light. The optical coupler 613 multiplexes or demultiplexes input optical signals. For example, the optical coupler 613 demultiplexes an optical signal input via an optical transmission line 621 and outputs the demultiplexed optical signals to optical transmission lines 622 and 623. The optical coupler 613 multiplexes an optical signal input via the optical transmission line 622 and an optical signal input via the optical transmission line 623 and outputs the multiplexed optical signal to the optical transmission line 621. Note that the optical signal flowing through the optical transmission line to which the optical nonreflective terminator 614 is connected is terminated by the optical nonreflective terminator 614.

In a case in which the transmission/reception separator illustrated in Fig. 7 is provided in the optical node device 10a, for example, the optical transmission line 621 in the transmission/reception separator 61 is connected to the port 6 of the optical SW 50, the first optical filter 611 in the transmission/reception separator 61 is connected to the wavelength multiplexer/demultiplexer 52-2, and the second optical filter 612 in the transmission/reception separator 61 is connected to the wavelength multiplexer/demultiplexer 52-1.

In a case in which the transmission/reception separator illustrated in Fig. 7 is provided in the optical node device 15a, for example, the optical transmission line 621 in the transmission/reception separator 65 is connected to the port 8 of the optical SW 50, the first optical filter 611 in the transmission/reception separator 65 is connected to the wavelength multiplexer/demultiplexer 57-2, and the second optical filter 612 in the transmission/reception separator 65 is connected to the wavelength multiplexer/demultiplexer 57-1.

According to the optical communication system 1a configured as described above, the same effects as those of the first embodiment can be obtained by including the transmission/reception separator (for example, the transmission/reception separator illustrated in Fig. 7) other than the transmission/reception separator having no wavelength dependency.

### (Fourth Embodiment)

In a fourth embodiment, a configuration including a transmission/reception separator between a subscriber device and an optical SW will be described.

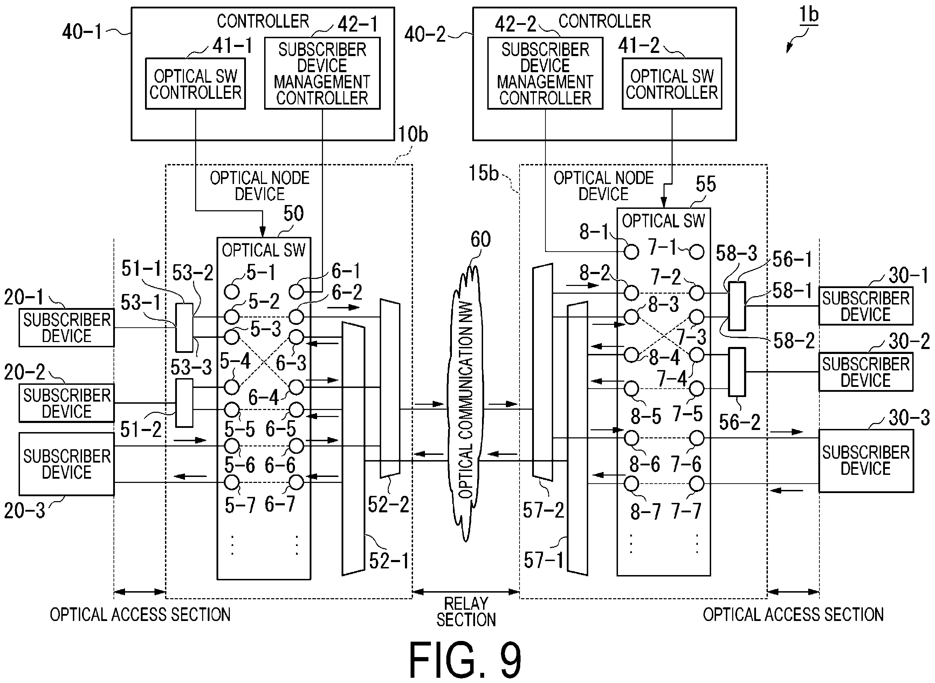

Fig. 9 is a diagram illustrating a configuration of an optical communication system 1b in the fourth embodiment. The optical communication system 1b includes a plurality of optical node devices 10b and 15b, a plurality of subscriber devices 20-1 to 20-3, a plurality of subscriber devices 30-1 to 30-3, and a plurality of controllers 40-1 and 40-2. The optical communication system 1b is different from the optical communication system 1 in that the optical node devices 10b and 15b are provided instead of the optical node devices 10 and 15.

The optical node device 10b includes an optical SW 50, a plurality of transmission/reception separators 51-1 and 51-2, and a plurality of wavelength multiplexers/demultiplexers 52-1 and 52-2. The optical node device 10b includes the plurality of transmission/reception separators 51-1 and 51-2 between the subscriber device 20 and the optical SW 50. More specifically, the transmission/reception separator 51-1 is connected to the subscriber device 20-1 connected to the optical SW 50 by through a one-core optical transmission line, and the transmission/reception separator 51-2 is connected to the subscriber device 20-2. As a result, an optical signal transmitted from the subscriber device 20 connected to the transmission/reception separator 51 can be demultiplexed (converted into two cores) and output to the optical SW 50.

The optical node device 15b includes the optical SW 55, a plurality of transmission/reception separators 56-1 and 56-2, and the plurality of wavelength multiplexers/demultiplexers 57-1 and 57-2. The optical node device 15b includes the plurality of transmission/reception separators 56-1 and 56-2 between the subscriber device 30 and the optical SW 55. More specifically, the transmission/reception separator 56-1 is connected to the subscriber device 30-1 connected to the optical SW 55 through a one-core optical transmission line, and the transmission/reception separator 56-2 is connected to the subscriber device 30-2. As a result, an optical signal transmitted from the subscriber device 30 connected to the transmission/reception separator 56 can be demultiplexed (converted into two cores) and output to the optical SW 55.

In the configuration of the first embodiment, it is necessary to select the connection configuration between the optical SW and the wavelength multiplexer/demultiplexer in accordance with the connection configuration of the optical access section. On the other hand, according to the optical communication system 1b configured as described above, it is possible to flexibly configure connection of the optical transmission line between the optical SW and the wavelength multiplexer/demultiplexer regardless of whether communication is one-core bidirectional communication or two-core communication, that is, regardless of the connection form of the optical access section.

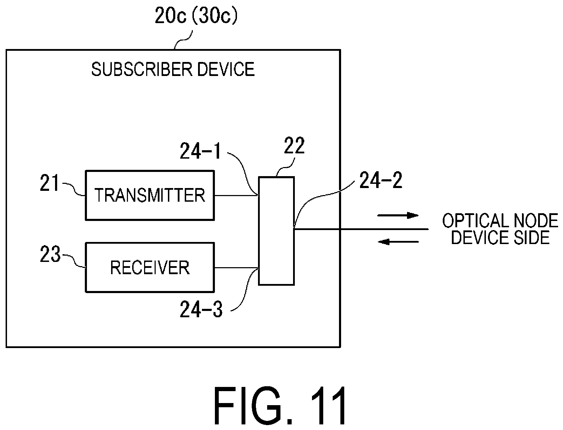

Note that although the circulator has been described as an example of the transmission/reception separator in Fig. 9, a transmission/reception separator illustrated in Fig. 11 may be used.

### (Fifth Embodiment)

In a fifth embodiment, a configuration including a transmission/reception separator in a subscriber device will be described.

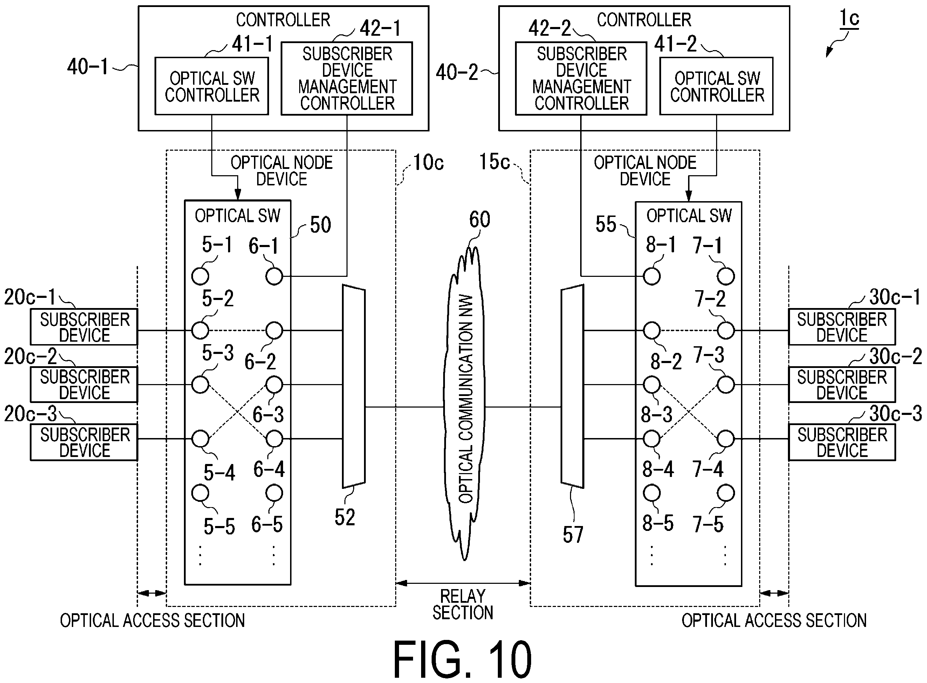

Fig. 10 is a diagram illustrating a configuration of an optical communication system 1c in the fifth embodiment. The optical communication system 1c includes a plurality of optical node devices 10c and 15c, a plurality of subscriber devices 20c-1 to 20c-3, a plurality of subscriber devices 30c-1 to 30c-3, and a plurality of controllers 40-1 and 40-2. The optical communication system 1c is different from the optical communication system 1 in that the optical node devices 10c and 15c are provided instead of the optical node devices 10 and 15, and subscriber devices 20c and 30c are provided instead of the subscriber devices 20 and 30.

The optical node device 10c includes an optical SW 50 and one wavelength multiplexer/demultiplexer 52. As described above, in the optical node device 10c, no transmission/reception separator is provided between the optical SW 50 and the wavelength multiplexer/demultiplexer 52. Ports 6-2 to 6-4 of the optical SW 50 are connected to the wavelength multiplexer/demultiplexer 52 via optical transmission lines. Therefore, the optical SW controller 41-1 controls the connection relationship between the ports of the optical SW 50 depending on the wavelength of an optical signal transmitted by the subscriber device 20.

The optical node device 15c includes an optical SW 55 and one wavelength multiplexer/demultiplexer 57. As described above, in the optical node device 15c, no transmission/reception separator is provided between the optical SW 55 and the wavelength multiplexer/demultiplexer 57. Ports 8-2 to 8-4 of the optical SW 55 are connected to the wavelength multiplexer/demultiplexer 57 via optical transmission lines. Therefore, the optical SW controller 41-2 controls the connection relationship between the ports of the optical SW 55 depending on the wavelength of an optical signal transmitted by the subscriber device 30.

Fig. 11 is a diagram illustrating an example of a configuration of the subscriber devices 20c and 30c in the fifth embodiment. The subscriber devices 20c and 30c include a transmitter 21, a transmission/reception separator 22, and a receiver 23. The transmitter 21 transmits an optical signal having a wavelength assigned by the controller 40 via the transmission/reception separator 22.

Similarly to the first embodiment, the transmission/reception separator 22 is, for example, a circulator. The transmission/reception separator 22 includes a first port 24-1, a second port 24-2, and a third port 24-3. The first port 24-1 included in the transmission/reception separator 22 is connected to the transmitter 21. The second port 24-2 included in the transmission/reception separator 22 is connected to the optical transmission line connected to the optical node devices 10c and 15c. The third port 24-3 included in the transmission/reception separator 22 is connected to the receiver 23. An optical signal input to the first port 24-1 is output from the second port 24-2. An optical signal input to the second port 24-2 is output from the third port 24-3.

The receiver 23 receives an optical signal transferred from the transmission/reception separator 22. For example, the receiver 23 is a photodiode (PD) or the like.

The transmitter 21 and the receiver 23 are wavelength tunable optical transceivers. The controller 40-1 allocates the same wavelength to the subscriber device 20c for transmission and reception or allocates different wavelengths to the subscriber device 20c for transmission and reception. Similarly, the controller 40-2 allocates the same wavelength to the subscriber device 30c for transmission and reception or allocates different wavelengths to the subscriber device 30c for transmission and reception.

According to the optical communication system 1c configured as described above, even if a subscriber device to which the same wavelength is allocated for transmission and reception and a subscriber device to which different wavelengths are allocated for transmission and reception are mixed, the subscriber devices 20c and 30c include the transmission/reception separator (for example, a circulator) having no wavelength dependency, and thus it is not necessary for the controller 40 to change the policy of wavelength management for transmission and reception in accordance with the connection form of the optical access section. Therefore, wavelength management can be easily performed.

Some functional units of the optical node devices 10, 10a, 15, and 15a and the controller 40 in the above-described embodiments may be realized by a computer. In that case, a program for realizing this function may be recorded in a computer-readable recording medium, and the program recorded in the recording medium may be read and executed by a computer system to realize this function. Note that the "computer system" herein includes an OS and hardware such as peripheral devices.

In addition, the "computer-readable recording medium" refers to a portable medium such as a flexible disk, a magneto-optical disk, a ROM, or a CD-ROM, or a storage device such as a hard disk built in a computer system. Furthermore, the "computer-readable recording medium" may include a medium that dynamically holds a program for a short time, such as a communication line in a case in which the program is transmitted via a network such as the Internet or a communication line such as a telephone line, and a medium that holds a program for a certain period of time, such as a volatile memory inside a computer system serving as a server or a client in that case. In addition, the program may be for realizing some of the functions described above, may be capable of realizing the functions described above in combination with a program already recorded in a computer system, or may be realized using a programmable logic device such as an FPGA.

Although the embodiment of the present invention has been described in detail with reference to the drawings, the specific configuration is not limited to the embodiment, and includes design and the like within a range not departing from the gist of the present invention.

### Industrial Applicability

The present invention can be applied to an optical communication system in which a subscriber device that performs one-core bidirectional communication and a subscriber device that performs two-core bidirectional communication are mixed in an optical access section in the optical communication system.

### Reference Signs List

10, 10a, 10b, 10c, 15, 15a, 15b, 15c Optical node device
20, 20c, 20-1 to 20-3, 20c-1 to 20c-3, 30, 30c, 30-1 to 30-3, 30c-1 to 30c-3 Subscriber device
21 Transmitter
23 Receiver
40, 40-1 to 40-2 Controller
41, 41-1 to 41-2 Optical SW controller
42, 42-1 to 42-2 Subscriber device management controller
22, 51, 51-1 to 51-2, 61-1 to 61-2, 65-1 to 65-2 Transmission/reception separator
52, 52-1 to 52-2, 57, 57-1 to 57-2 Wavelength multiplexer/demultiplexer

## Claims

1. An optical node device to which a first subscriber device and a second subscriber device are connected in an optical communication system in which the first subscriber device and the second subscriber device are mixed, the first subscriber device being connected by one core using different wavelengths in transmission and reception, the second subscriber device being connected by two cores using the same wavelength in transmission and reception, the optical node device comprising:
a transmission/reception separator configured to transfer an optical signal transmitted from the first subscriber device and an optical signal addressed to the first subscriber device without interference; and
an optical switch configured to control a connection relationship between ports such that an optical signal transmitted from the first subscriber device or an optical signal addressed to the first subscriber device passes through the transmission/reception separator and an optical signal transmitted from the second subscriber device or an optical signal addressed to the second subscriber device does not pass through the transmission/reception separator, and outputs an optical signal input from a certain optical transmission line from another optical transmission line.

2. The optical node device according to claim 1, wherein
the transmission/reception separator is a circulator,
the circulator includes a first port, a second port, and a third port,
the first port is connected to the optical switch,
the second port is connected to a first wavelength multiplexer/demultiplexer that multiplexes an optical signal transmitted from the first subscriber device or an optical signal transmitted from the second subscriber device,
the third port is connected to a second wavelength multiplexer/demultiplexer that demultiplexes an optical signal addressed to the first subscriber device or the second subscriber device, and
the circulator outputs an optical signal input to the first port to the first wavelength multiplexer/demultiplexer connected to the second port and outputs an optical signal input to the third port to the optical switch connected to the first port.

3. The optical node device according to claim 1, wherein
the transmission/reception separator is a circulator,
the circulator includes a first port, a second port, and a third port,
the first port is connected to the first subscriber device,
the second port and the third port are connected to the optical switch, and
the circulator outputs an optical signal input to the first port to the optical switch connected to the second port and outputs an optical signal input to the third port to the first subscriber device connected to the first port.

4. The optical node device according to claim 1, wherein
the transmission/reception separator includes an optical coupler, a first optical filter that is used at the time of transmission to transmit a specific wavelength, and a second optical filter that is used at the time of reception to transmit a specific wavelength, and
the first optical filter and the second optical filter have transmission characteristics in accordance with a wavelength shift width of transmission and reception.

5. The optical node device according to claim 1, wherein
the transmission/reception separator is provided between the first subscriber device and the optical switch.

6. The optical node device according to claim 2, wherein
the transmission/reception separator is provided between the optical switch and the first wavelength multiplexer/demultiplexer or the second wavelength multiplexer/demultiplexer.

7. An optical communication system comprising:
a plurality of subscriber devices; and
an optical node device to which the plurality of subscriber devices is connected, wherein
each of the subscriber devices includes:
a transmitter configured to transmit an optical signal; and
a transmission/reception separator configured to transfer the optical signal transmitted by the transmitter and a received optical signal without interference, and
the optical node device includes an optical switch that controls a connection relationship between ports such that optical signals transmitted from the subscriber devices are output to destination optical transmission lines, and optical signals addressed to the subscriber devices are output to the subscriber devices.

8. A transfer method performed by an optical node device to which a first subscriber device and a second subscriber device are connected in an optical communication system in which the first subscriber device and the second subscriber device are mixed, the first subscriber device being connected by one core using different wavelengths in transmission and reception, the second subscriber device being connected by two cores using the same wavelength in transmission and reception, the transfer method comprising:
transferring, by a transmission/reception separator, an optical signal transmitted from the first subscriber device and an optical signal addressed to the first subscriber device without interference; and
controlling a connection relationship between ports such that an optical signal transmitted from the first subscriber device or an optical signal addressed to the first subscriber device passes through the transmission/reception separator and an optical signal transmitted from the second subscriber device or an optical signal addressed to the second subscriber device does not pass through the transmission/reception separator, and outputting an optical signal input from a certain optical transmission line from another optical transmission line.
